# EUROPÄISCHE PATENTSCHRIFT

(11) **EP 2 536 501 B1**
(45) Veröffentlichungstag und Bekanntmachung des Hinweises auf die Patenterteilung: **07.09.2016**
(21) Anmeldenummer: 11705189.6
(22) Anmeldetag: 15.02.2011
(51) Int. Cl.: B01J 35/04, B01J 37/02, B05D 7/22

(54) **BESCHICHTUNGSVORRICHTUNG UND VERFAHREN**
COATING DEVICE AND METHOD
DISPOSITIF ET PROCÉDÉ DE REVÊTEMENT

(30) Priorität: 19.02.2010 DE 102010008700
(43) Veröffentlichungstag der Anmeldung: 26.12.2012
(73) Patentinhaber: Umicore AG & Co. KG, 63457 Hanau-Wolfgang (DE)
(72) Erfinder: MERGNER, Bernd, 79618 Rheinfelden (DE); HASSELMANN, Wolfgang, 79618 Rheinfelden (DE); DETTERBECK, Dieter, 63589 Altenhasslau (DE); ADLER, Sigurd, 71563 Affalterbach (DE)
(86) Internationale Anmeldenummer: PCT/EP2011/052197
(87) Internationale Veröffentlichungsnummer: WO 2011/101337

(56) Entgegenhaltungen:
- EP-A1- 1 136 462
- WO-A2-01/10573

## Beschreibung

Bei der Beschichtung von keramischen oder metallischen Wabenkörpern / Filtern, im Folgenden auch Substrat genannt, mit flüssigen Beschichtungsmedien treten verschiedene Probleme auf.

Eine Möglichkeit der Beschichtung der Substrate ist, diesen mit den Öffnungen einer Seite mit dem vorgelegten Beschichtungsmedium zu kontaktieren und durch Anlegen eines Unterdrucks an der gegenüberliegenden Seite des Substrats das flüssige Beschichtungsmedium durch die Kanäle des Substrats hindurchzusaugen. Wenn nur eine Beschichtung der Kanäle auf einem Teil Ihrer Länge durchgeführt werden soll ist nachteilig, dass durch das zwangsläufig entstehende Strömungsprofil unterschiedliche Kanäle bis zu einer unterschiedlichen Länge beschichtet werden.

Wird das Beschichtungsmedium durch Druck gegen die Schwerkraft in die Kanäle gepresst, so muss hierbei überprüft werden, wann die Flüssigkeit bei einer vollständigen Beschichtung der Kanäle an der Oberseite austritt. Bei einer Beschichtung auf einem Teil der Länge der Kanäle wird die Höhe der Flüssigkeitssäule des Beschichtungsmediums im Inneren der Kanäle durch Sensoren bestimmt. Ein derartiges Verfahren ist beispielsweise in CN 201143430 und in EP-A1-1273344 beschrieben.

Dieses Verfahren funktioniert jedoch nicht, wenn das Substrat aus leitenden oder halbleitenden Materialien, wie Metallen oder Siliziumkarbid, besteht.

Es war die Aufgabe der Erfindung, eine einfache Vorrichtung zur Beschichtung von Tragkörpern bereitzustellen, welche eine einfache Verfolgung der Füllhöhe an Beschichtungsmedium innerhalb des Tragkörpers unabhängig von dessen Material ermöglicht. Die Aufgabe wird dadurch gelöst, dass der flüssigkeitsführende Teil der Beschichtungsvorrichtung (122) über ein Ventil (125) mit einem Steigrohr (127) verbunden ist, wobei das Ventil (125) gleiche Druckverhältnisse und damit einen im Wesentlichen gleichen Flüssigkeitsanstieg im Steigrohr (127) wie im Tragkörper sicherstellt, so daß das Steigrohr (127) die Kontrolle der Füllhöhe des Beschichtungsmediums (124) im Tragkörper (121) gestattet.

### Kurze Beschreibung der Erfindung

Spezifische Ausgestaltungen der Erfindung betreffen unter Anderem:
1. Anordnung zum vollständigen oder teilweisen Beschichten von Tragkörpern (121) mit flüssigem Beschichtungsmedium (124), wobei die Tragkörper (121) je eine Zylinderachse, zwei Stirnflächen, eine Mantelfläche und eine axiale Länge L aufweist und von der ersten Stirnfläche zur zweiten Stirnfläche von einer Vielzahl von Kanälen durchzogen sind und der Tragkörper (121) mit einer gewünschten Menge des Beschichtungsmediums (124) beschichtet wird, indem seine Zylinderachse vertikal ausgerichtet und das Beschichtungsmedium (124) durch mindestens eine der Stirnflächen des Tragkörpers in die Kanäle eingebracht wird,
   **dadurch gekennzeichnet,**
   dass der Tragkörper (121) an einer Beschichtungsvorrichtung (122) angeordnet ist, deren flüssigkeitsführender Teil über ein Ventil (125) mit einem Steigrohr (127) verbunden ist, wobei das Ventil (125) gleiche Druckverhältnisse und damit einen im Wesentlichen gleichen Flüssigkeitsanstieg im Steigrohr (127) wie im Tragkörper sicherstellt, so daß das Steigrohr (127) die Kontrolle der Füllhöhe des Beschichtungsmediums (124) im Tragkörper (121) gestattet.
2. Anordnung nach Punkt 1, wobei die Füllhöhe kleiner ist als die axiale Länge L des Tragkörpers.
3. Anordnung nach Punkt 1 oder 2, wobei die Kontrolle der Füllhöhe des Beschichtungsmediums (124) im Tragkörper (121) durch mindestens einen Sensor (126) am Steigrohr (127) bewirkt wird.
4. Anordnung nach Punkt 3, wobei die Sensoren ausgewählt sind aus der Gruppe bestehend aus Leitfähigkeitssensoren, Ultraschallsensoren, Lichtschranken und deren Kombinationen.
5. Verfahren zum vollständigen oder teilweisen Beschichten von Tragkörpern (121) mit flüssigem Beschichtungsmedium (124), wobei die Tragkörper (121) je eine Zylinderachse, zwei Stirnflächen, eine Mantelfläche und eine axiale Länge L aufweist und von der ersten Stirnfläche zur zweiten Stirnfläche von einer Vielzahl von Kanälen durchzogen sind, wobei der Tragkörper (121) an einer Beschichtungsvorrichtung (122) angeordnet ist, deren flüssigkeitsführender Teil über ein Ventil (125) mit einem Steigrohr (127) verbunden ist,
   **dadurch gekennzeichnet,** dass
   - das Ventil (125) eingestellt wird, dass gleiche Druckverhältnisse und damit ein im Wesentlichen gleicher Flüssigkeitsanstieg im Steigrohr (127) wie im Tragkörper sichergestellt ist, so daß das Steigrohr (127) die Kontrolle der Füllhöhe des Beschichtungsmediums (124) im Tragkörper (121) gestattet,
   - der Tragkörper (121) mit einer gewünschten Menge des Beschichtungsmediums (124) beschichtet wird, indem seine Zylinderachse vertikal ausgerichtet und das Beschichtungsmedium(124) durch mindestens eine der Stirnflächen des Tragkörpers in die Kanäle eingebracht wird;
   - am Steigrohr (127) der Anstieg der Füllhöhe kontrolliert und bei Erreichen einer gewünschten Füllhöhe ein weiterer Flüssigkeitsanstieg unterbunden wird.
6. Verfahren nach Punkt 5, wobei der weitere der Anstieg der Füllhöhe durch Entfernen des Beschichtungsmediums (124) aus dem Tragkörper (121) unterbunden wird.
7. Verfahren nach Punkt 6, wobei die Entfernung durch Abpumpen, Aussaugen oder Ausblasen erfolgt.
8. Verfahren nach Punkt 5, wobei der Beschichtungsvorgang wiederholt wird.
9. Verfahren nach Punkt 8, wobei der Tragkörper (121) vor einer Wiederholung des Beschichtungsvorgangs um 180° gedreht und dann beschichtet wird, so dass die Beschichtung ausgehend von der gegenüberliegenden Stirnfläche des Tragkörpers (121) erfolgt.
10. Verfahren nach Punkt 8 oder 9, wobei das Beschichtungsmedium (124) bei der Wiederholung des Beschichtungsvorgangs gleich oder verschieden von dem Beschichtungsmedium eines vorangegangenen Beschichtungsvorgangs ist.
11. Verfahren nach einem der Punkte 5 bis 11, wobei der Tragkörper (121) in einem nachfolgenden Schritt mindestens einer Wärmebehandlung unterzogen wird.
12. Verfahren nach Punkt 11, wobei der Tragkörper (121) vor der Wärmebehandlung getrocknet wird.
13. Verfahren nach einem der Punkte 5 bis 11, wobei der Tragkörper vor dem Anordnen auf der Beschichtungsvorrichtung (122) angefeuchtet wird.
14. Verfahren zur Herstellung von Abgasanlagen enthaltend beschichtete Tragkörper (121), wobei mindestens ein Tragkörper (121) nach einem Verfahren der Ansprüche 5 bis 12 beschichtet wird und mindestens ein derart beschichteter Tragkörper (121) mit der Abgasanlage verbunden wird.
15. Verfahren nach Punkt 14, wobei die Abgasanlage eine Abgasanlage eines Kraftfahrzeugs ist.
16. Verwendung einer Vorrichtung nach einem der Punkte 1 bis 4 zur Herstellung beschichteter Tragkörper zur Reinigung von Abgasen.

### Detaillierte Beschreibung der Erfindung

Die vorliegende Erfindung betrifft eine Anordnung zum vollständigen oder teilweisen Beschichten von Tragkörpern (121) mit flüssigem Beschichtungsmedium (124).

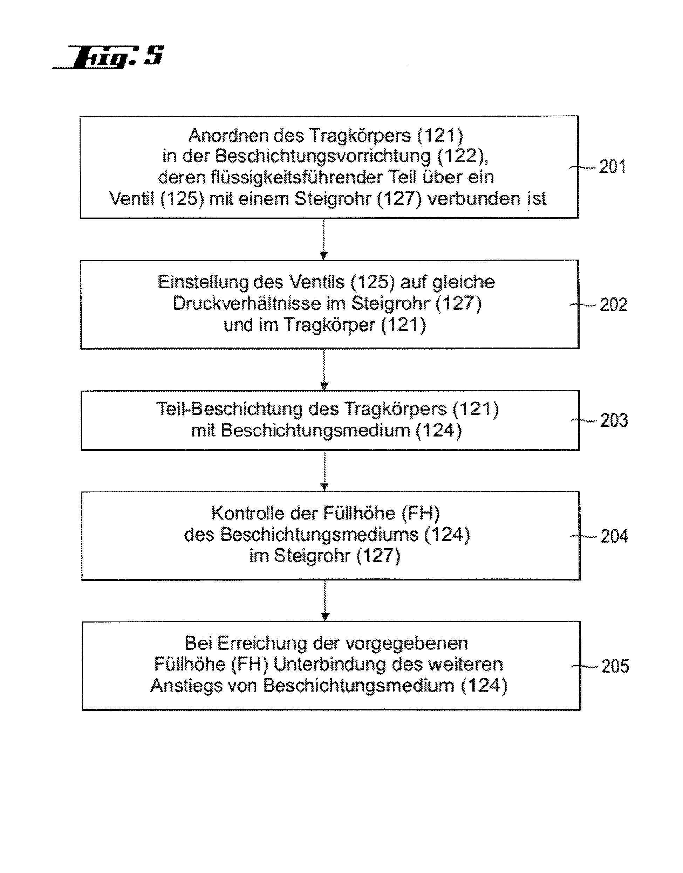

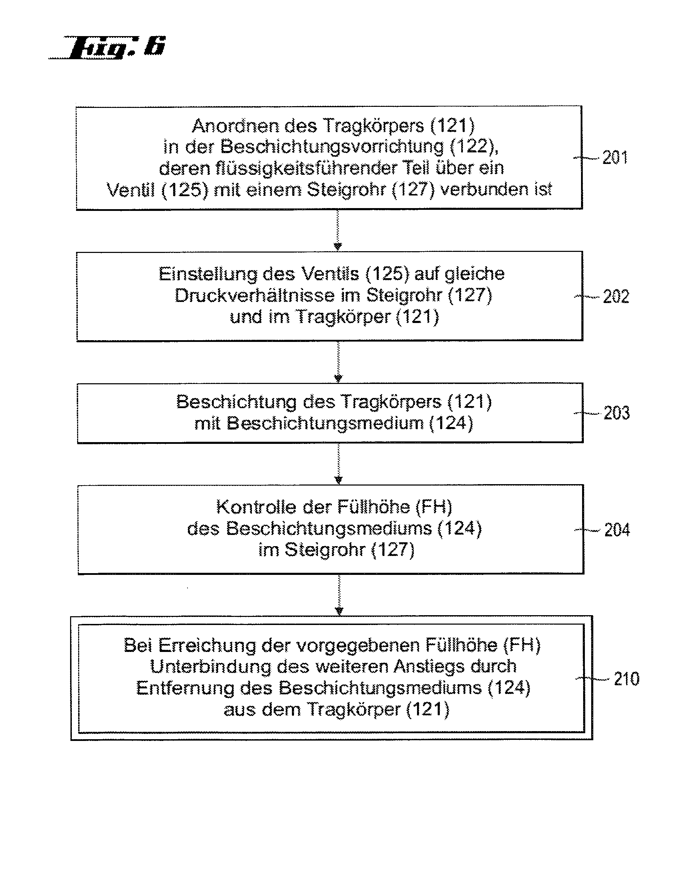

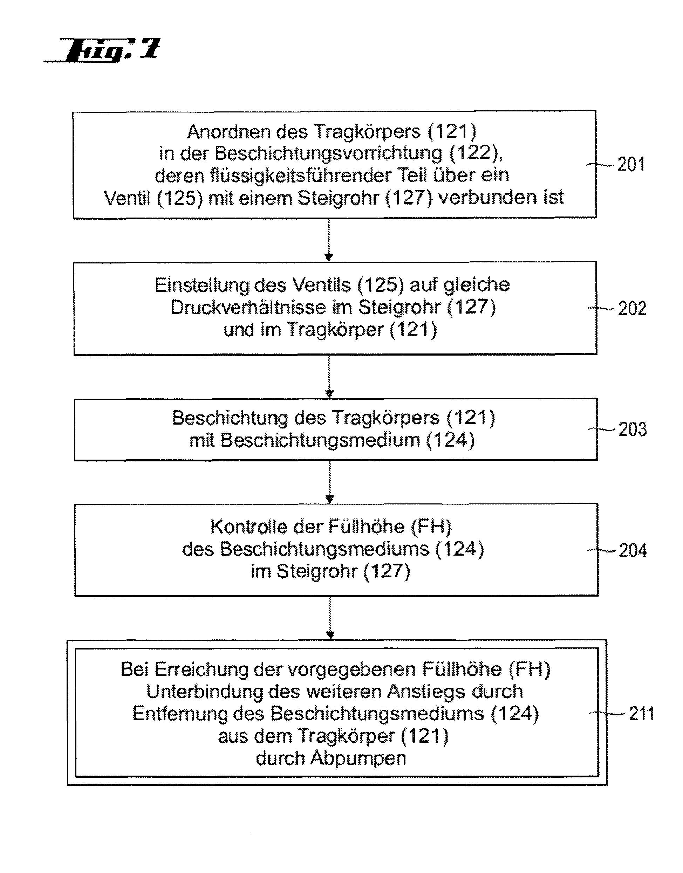

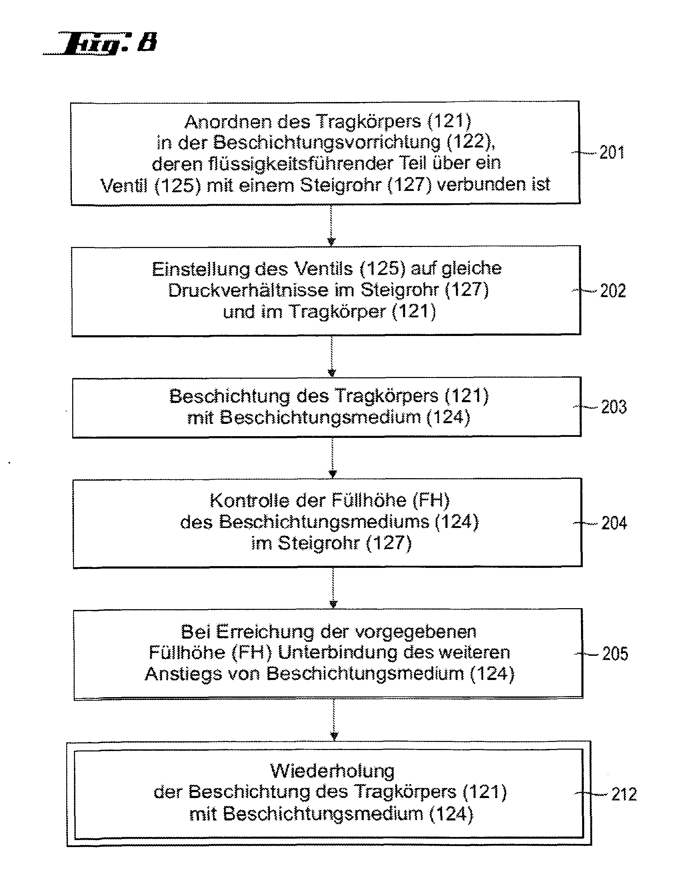

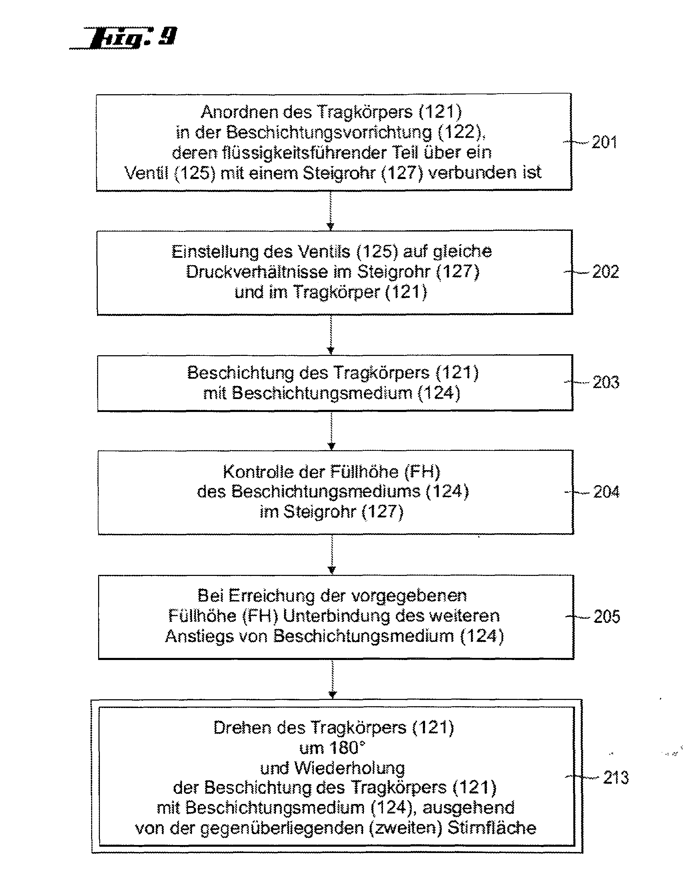

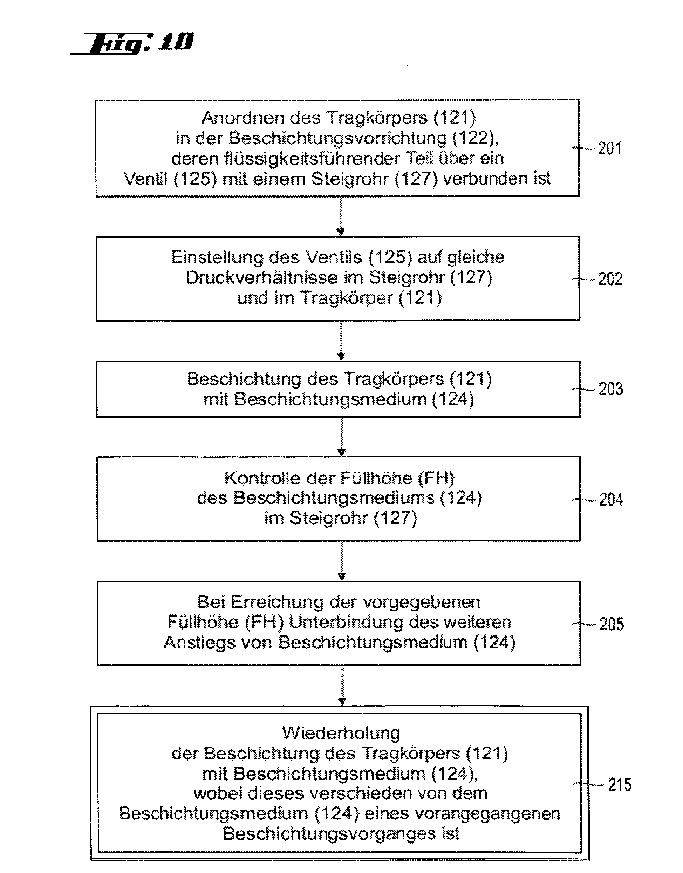

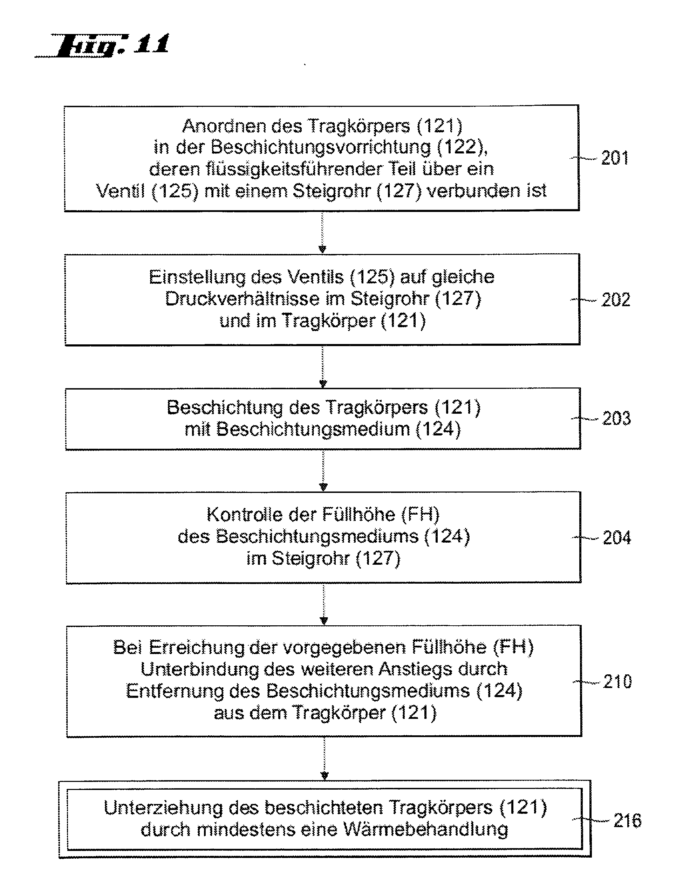

Ausführungsbeispiele sind in den Figuren 1 bis 11 beschrieben.

Es zeigen:
Fig.1 eine Beschichtungsanlage, bestehend aus einer Beschichtungsvorrichtung (122), einem Behälter (144) für das Beschichtungsmedium (124) und einem Vakuumbehälter (141), wobei eine Zuleitung (120) und Ableitung (140) sowie eine Rückführleitung (142), mit Rückförderpumpe (143) für Beschichtungsmedium (124) vorgesehen sind.
Fig.2 eine Beschichtungsvorrichtung (122) in detaillierter Darstellung, nach Ausschnitt II-IV
Fig.3 eine Betriebsvariante der Beschichtungsvorrichtung (122) nach Fig.1 und 2,
Fig.4 eine weitere Betriebsvariante der Beschichtungsvorrichtung (122) nach Fig.1 bis 3 und
Fig.5 bis Fig.11 in Blockschaltbildform, Beispiele der erfindungsgemäßen Verfahrensabläufe entsprechend den Ansprüchen 5 bis 11.

Der Tragkörper (121), oft auch als Substrat bezeichnet, ist im Allgemeinen ein Hohlsubstrat, welches aus Metallen oder Keramiken besteht und mindestens einen Innenkanal aufweist, üblicherweise eine Vielzahl von Innenkanälen (133). Die Tragkörper sind im Allgemeinen im Wesentlichen zylindrische Tragkörper, welche je eine Zylinderachse (A), zwei Stirnflächen (131, 132), eine Mantelfläche (130) und eine axiale Länge L aufweisen und von der ersten Stirnfläche zur zweiten Stirnfläche von einer Vielzahl von Kanälen durchzogen sind. Solche Tragkörper werden häufig auch als Wabenkörper bezeichnet. Insbesondere kann es sich bei den Tragkörpern um Durchfluß-Wabenkörper, aber auch um Wandflußfilter handeln, welche eine hohe Zelldichte (Anzahl der Innenkanäle pro Querschnittsfläche) von etwa 10 cm⁻² bis 250 cm⁻² aufweisen können. Der Tragkörper kann beispielsweise aus Cordierit, Mullit, Aluminiumtitanat, Siliziumkarbid oder Metallen wie Stahl bzw. Edelstahl bestehen. Der Tragkörper ist vorteilhaft ein monolithischer, zylindrisch geformter Katalysatortragkörper und wird von einer Vielzahl von Strömungskanälen (133) für die Abgase von Verbrennungskraftmaschinen durchzogen, die parallel zur Zylinderachse (A) liegen. Solche monolithischen Katalysatortragkörper werden im großen Maßstab für die Herstellung von Autoabgaskatalysatoren verwendet. Die Querschnittsform der Katalysatortragkörper hängt von den Einbauerfordernissen am Kraftfahrzeug ab. Weit verbreitet sind Katalysatorkörper mit rundem Querschnitt, elliptischem, ovalen oder dreieckförmigem Querschnitt. Die Strömungskanäle weisen meist einen quadratischen Querschnitt auf und sind in einem engen Raster über den gesamten Querschnitt der Katalysatorkörper angeordnet. Je nach Anwendungsfall variiert die Kanal- beziehungsweise Zelldichte der Strömungskanäle meist zwischen 10 und 250 cm⁻². Für die Abgasreinigung von Personenkraftwagen werden heute noch oft Katalysatortragkörper mit Zelldichten von etwa 62 cm⁻² eingesetzt.

Besteht der Tragkörper (121) aus Siliziumkarbid oder Metallen wie Stahl bzw. Edelstahl, so ist die Detektierung der Füllhöhe erschwert und die vorliegende Erfindung stellt eine neue Vorgehensweise zur Lösung dieses Problems bereit. Selbstverständlich kann nach dieser Vorgehensweise aber auch zur Beschichtung von Tragkörpern aus Cordierit, Mullit oder anderen Materialien eingesetzt werden.

Die Tragkörper (121) weisen je eine Zylinderachse (A), zwei Stirnflächen (131, 132), eine Mantelfläche (130) und eine axiale Länge L auf und sind von der ersten Stirnfläche zur zweiten Stirnfläche von einer Vielzahl von Kanälen (133) durchzogen. Der Tragkörper (121) wird mit einer gewünschten Menge des Beschichtungsmediums (124) beschichtet, indem seine Zylinderachse (A) vertikal ausgerichtet und das Beschichtungsmedium (124) durch mindestens eine der Stirnflächen des Tragkörpers (121) eingebracht wird. Dazu wird der Tragkörper (121) auf der Beschichtungsvorrichtung (122) vorteilhaft flüssigkeitsdicht angeordnet, was durch mindestens eine Dichtung (146) bewirkt werden kann. Die Dichtung kann hohl sein und beim Aufsetzen auf oder Einsetzen in die Beschichtungsvorrichtung mit Gas oder Flüssigkeit gefüllt werden und dicht abschließen. Die Dichtigkeit der Verbindung kann durch einen Druck- oder Flußsensor kontrolliert werden.

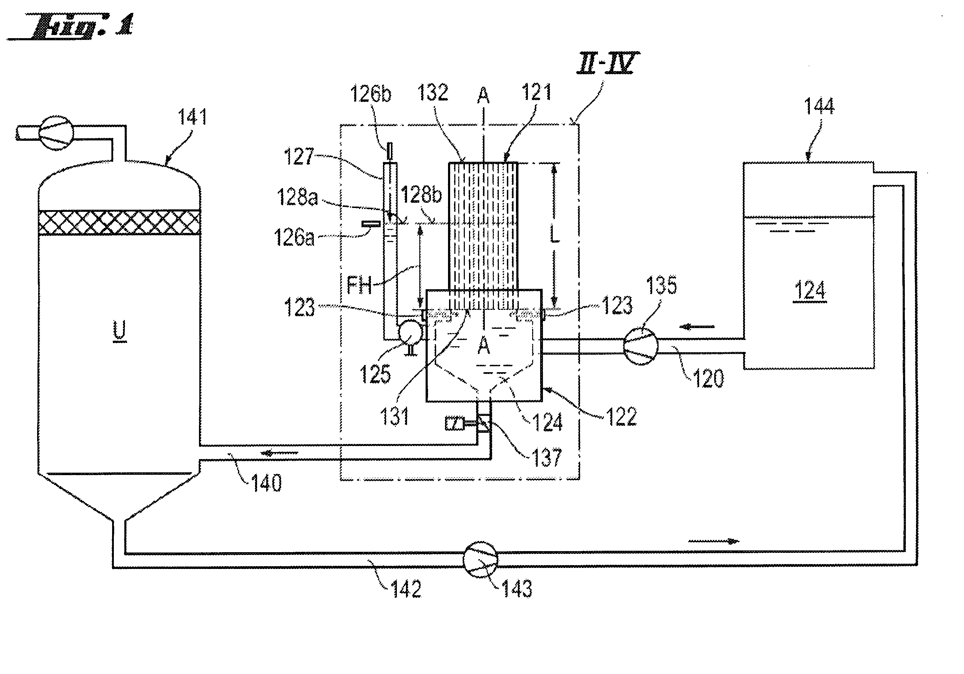

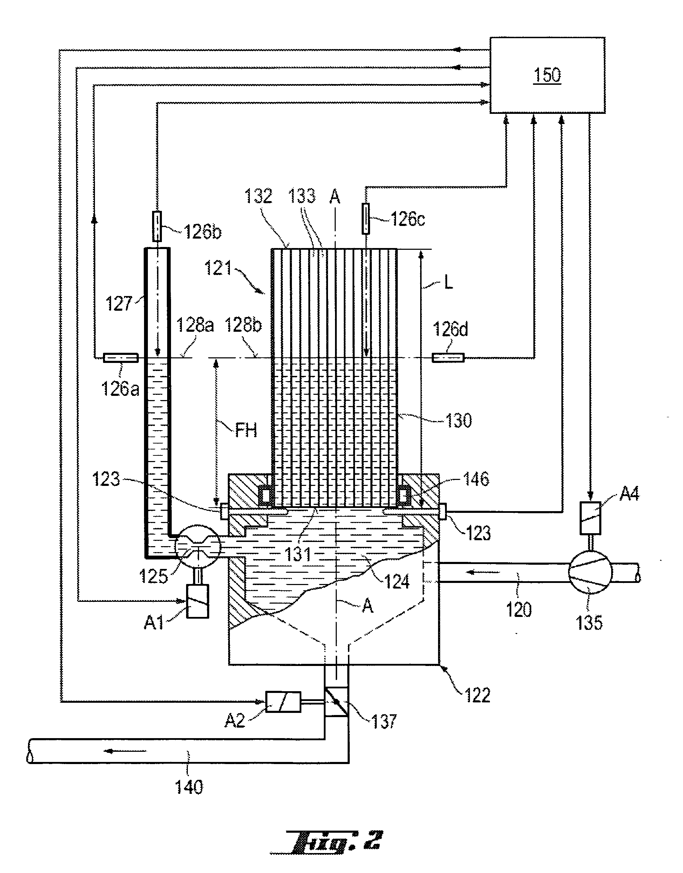

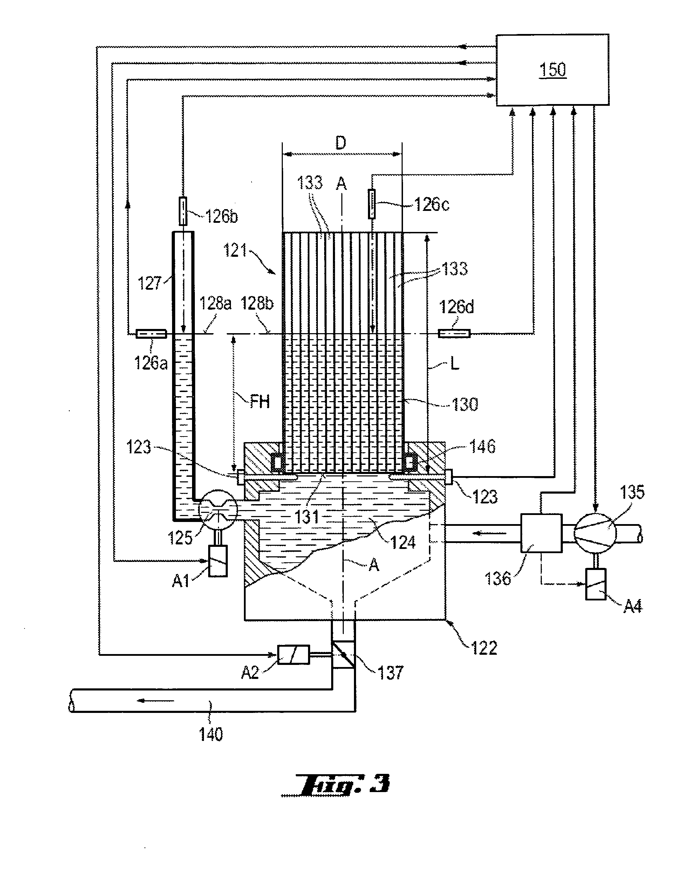

Anschließend wird das Beschichtungsmedium (124) gemäß Fig.1 bis 3 entgegen der Schwerkraft in den Tragkörper (121) eingebracht, was durch Anlegen eines Überdrucks auf das Beschichtungsmedium (124) geschehen kann, so dass ein Anstieg des Füllhöhe (FH) an Beschichtungsmedium (124) im Tragkörper (121) bewirkt wird. Dabei wird durch die Förderpumpe (135) eine bestimmte Menge an Beschichtungsmedium (124) vorgelegt. Hierbei kann, wenn der Flüssigkeitsstand die Nähe der ersten Stirnfläche (131) des Tragkörpers (121) erreicht, durch die Sensoren (123) ein Signal an den Zentralrechner (150) gegeben werden, welcher je nach Ausführung der Erfindung ein Abschaltsignal für die Förderpumpe (135) geben oder ein Ventil betätigen kann, um den weiteren Zufluß an Beschichtungsmedium zu unterbrechen. Ähnlich kann vorgegangen werden, indem die Vorlage an Beschichtungsmedium (124) mit einer durch ein Dosimeter (136) gesteuerten Überschußmenge (Fig.3) erfolgt.

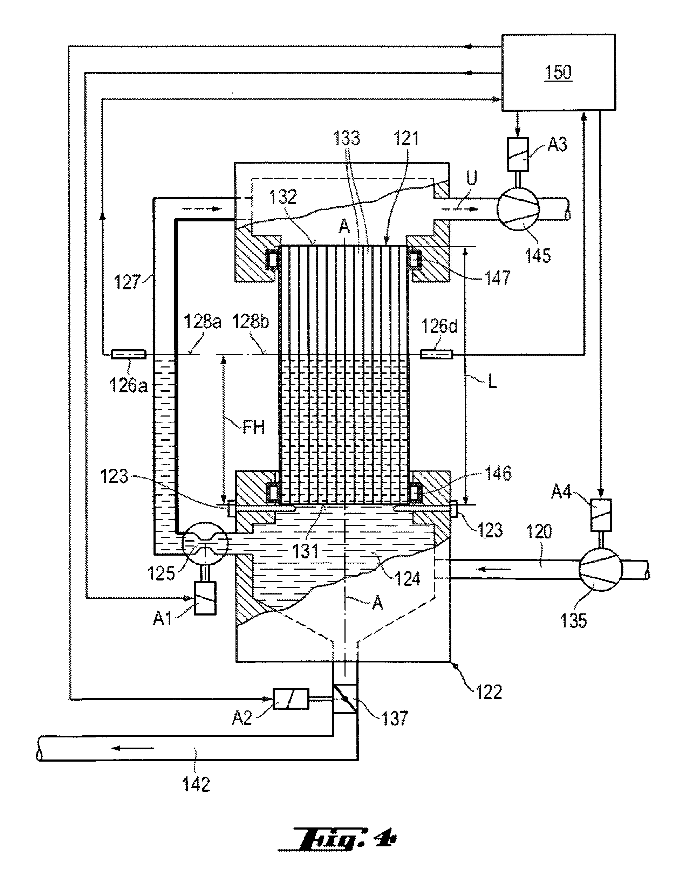

Das Beschichtungsmedium (124) kann auch durch Anlegen eines Unterdrucks an der Oberseite des Tragkörpers (121) eingebracht werden. Hierzu wird das Beschichtungsmedium (124) gemäß Fig.4 durch Abpumpen oder Anlegen eines Unterdrucks in den Tragkörper (121) gesaugt, beispielsweise durch ein Sauggebläse (145) oder einen Unterdruckbehälter. Dazu muß natürlich der gleiche Unterdruck auch an das Steigrohr (127) angelegt werden, wobei in einer spezifischen Ausgestaltung der Erfindung eine Dichtung (147) zwischen Absaughaube (148) und Tragkörper (121) vorgesehen ist.

Das Beschichtungsmedium (124) ist flüssig und beispielsweise eine Suspension oder Dispersion zur Beschichtung von Abgasfiltern für Kraftfahrzeuge ("Washcoat"), welche katalytisch aktive Komponenten oder deren Precursor sowie anorganische Oxide wie Aluminiumoxid, Titandioxid, Zirconoxid oder deren Kombinationen enthält, wobei die Oxide mit z.B. Silizium oder Lanthan dotiert sein können. Als katalytisch aktive Komponenten können Oxide von Vanadium, Chrom, Mangan, Eisen, Kobalt, Kupfer, Zink, Nickel oder Seltenerdmetalle wie Lanthan, Cer, Praseodym, Neodym, Promethioum, Samarium, Europium, Gadolinium, Terbium, Dysprosium, Holmium, Erbium, Thulium Ytterbium oder deren Kombinationen eingesetzt werden. Als katalytisch aktive Komponenten können außerdem Edelmetalle wie Platin, Palladium, Gold, Rhodium, Iridium, Osmium, Ruthenium sowie deren Kombinationen eingesetzt werden. Diese Metalle können auch als Legierungen miteinander oder anderen Metallen oder als Oxide vorliegen. Im flüssigen Beschichtungsmedium können die Metalle auch als Precursor vorliegen, wie Nitrate, Sulfite oder Organyle der genannten Edelmetalle sowie deren Mischungen, insbesondere können Palladiumnitrat, Palladiumsulfit, Platinnitrat, Platinsulfit oder Pt(NH₃)₄(NO₃)₂ eingesetzt werden. Durch Kalzinierung bei etwa 400°C bis etwa 700°C kann dann die katalytisch aktive Komponente aus dem Precursor erhalten werden. Zur Beschichtung eines Tragkörpers es zur Herstellung von Autoabgaskatalysatoren kann zunächst mit einer Suspension oder Dispersion eines anorganischen Oxids beschichtet werden und in einem folgenden Beschichtungsschritt mit einer Suspension oder Dispersion, welche einen oder mehrere katalytisch aktive Komponenten enthält. Das flüssige Beschichtungsmedium kann jedoch auch beide dieser Komponenten enthalten. Das flüssige Beschichtungsmedium weist oft einen Feststoffgehalt zwischen 35 und 52 % sowie Viskositäten zwischen 15 und 300 cps auf.

Bei der Beschichtung in der Anordnung der Erfindung ist der Tragkörper (121) an einer Beschichtungsvorrichtung (122) angeordnet, deren flüssigkeitsführender Teil über ein Ventil (125) mit einem Steigrohr (127) verbunden ist, wobei das Ventil (125) gleiche Druckverhältnisse und damit einen im Wesentlichen gleichen Flüssigkeitsanstieg im Steigrohr (127) wie im Tragkörper sicherstellt, so daß das Steigrohr (127) die Kontrolle der Füllhöhe (FH) des Beschichtungsmediums (124) im Tragkörper (121) gestattet. Die Erfindung ist besonders vorteilhaft, wenn die Füllhöhe (FH) kleiner ist als die axiale Länge L des Tragkörpers (121). Ansonsten kann die Füllhöhe auch beim Austreten an der oberen Stirnfläche des Tragkörpers detektiert und der Beschichtungsvorgang beendet werden. Die Anordnung der Erfingung erlaubt die Kontrolle der Füllhöhe (FH) des Beschichtungsmediums (124) im Tragkörper (121) durch mindestens einen Sensor (126) am Steigrohr (127).

In einer spezifischen Ausgestaltung der Erfindung können weitere Sensoren (123) an der Beschichtungsvorrichtung (122) angebracht sein, um eine für die Beschichtung des Tragkörpers (121) ausreichende Füllhöhe (FH) an Beschichtungsmedium (124) innerhalb der Beschichtungsvorrichtung (122) sicher zu stellen. Dabei können Sensoren (126a, 126b, 126c, 126d) vorgesehen sein, welche die Bestimmung der Füllhöhe (128a, 128b) im Steigrohr (127) und/oder im Tragkörper (121) ermöglichen und den Vergleich miteinander sowie mit der vorgegebenen Füllhöhe (FH) über den Zentralrechner (150) ermöglichen. Der Zentralrechner (150) kann das Ventil (125) über den Aktuator (A1) nachjustieren. Prinzipiell können für die Sensoren (123) und (126) alle geeigneten Sensoren eingesetzt werden, wobei diese bevorzugt ausgewählt sind aus der Gruppe bestehend aus Leitfähigkeitssensoren, Ultraschallsensoren, Lichtschranken, Brechungsindexsensor, kapazitiven Sensoren und deren Kombinationen. Bei der Detektion der Füllhöhe (FH) im Steigrohr (127) kann der Sensor (126a) seitlich angeordnet werden, wie beispielsweise eine Lichtschranke oder ein Leitfähigkeitssensor, welche bei Durchlauf der Flüssigkeitsfront ein Signal abgibt, welches die Beendigung des Beschichtungsvorgangs auslöst. Sollen veränderte Füllstände detektiert werden, so kann der seitlich angeordnete Sensor mechanisch neu angeordnet werden, also entlang des Steigrohrs (127) z.B. verschoben werden. Wird der Sensor, also z.B. ein Ultraschallsensor (126b), der nach dem Prinzip des Echolots arbeitet, oberhalb des Steigrohrs (127) angeordnet, so kann die Füllhöhe im Verlauf des Beschichtungsvorgangs messend verfolgt werden. Eine Änderung der Anordnung des Sensors ist in diesem Fall bei einer Änderung der gewünschten Füllhöhe nicht erforderlich.

Mit der Vorrichtung der Erfindung wird ein Verfahren zum vollständigen oder teilweisen Beschichten von Tragkörpern (121) mit flüssigem Beschichtungsmedium (124) durchgeführt, wobei der bzw. die Tragkörper (121) an einer Beschichtungsvorrichtung (122) angeordnet wird, deren flüssigkeitsführender Teil über ein Ventil (125) mit einem Steigrohr (127) verbunden ist. Das Ventil (125) wird eingestellt (Fig.1), in einer speifischen Ausgestaltung der Erfindung fest eingestellt, so dass gleiche Druckverhältnisse und damit ein im Wesentlichen gleicher Flüssigkeitsanstieg im Steigrohr (127) wie im Tragkörper (121) sichergestellt ist, so daß das Steigrohr (127) die Kontrolle der Füllhöhe des Beschichtungsmediums (124) im Tragkörper (121) gestattet.

Hierzu kann beispielsweise ein Tragkörper (121), für dessen Typ eine Kalibrierung des Ventils (125) durchgeführt werden soll, an der Beschichtungsvorrichtung (122) angeordnet werden. Dabei wird auch die Füllhöhe (FH) im Tragkörper (121) überprüft, um die Füllhöhen (128a und 128b) im Steigrohr (127) und Tragkörper (121) zu vergleichen bzw. miteinander korrelieren zu können. Hierzu kann z.B. der Tragkörper (121) mit einem Sensor (126d) zur Ermittlung der Füllhöhe (FH) versehen werden, bei Tragkörpern aus Siliziumkarbid oder Metall kann der Sensor (126c) oberhalb der oberen Stirnfläche des Tragkörpers angeordnet werden und den Austritt des Beschichtungsmediums (124) detektieren. Je nachdem, ob die Füllhöhe (FH) schneller im Tragkörper (121) oder dem Steigrohr (127) ansteigt, kann anschließend das Ventil (125) entsprechend justiert werden, um den Anstieg der Füllhöhe im Steigrohr (127) an den Anstieg der Füllhöhe (FH, 128b) im Tragkörper (121) anzupassen. Hierzu sind gegebenenfalls mehrere Versuche zur Einstellung nötig, um eine entsprechende Justierung des Ventils (125) vorzunehmen. Je nach Eigenschaften des Tragkörpers (121) und des Beschichtungsmediums (124) ist ein Austausch des Tragkörpers (121) mit einem neuen, unbeschichteten Tragkörper erforderlich, da bei bestimmten Kombinationen zwischen Tragkörpern und Zusammensetzungen des Beschichtungsmediums der Anstieg der Füllhöhe innerhalb des Tragkörpers durch bereits vorhandenes, vorher aufgebrachtes Beschichtungsmedium (124) verändert wird. Für einen bestimmten Typ des Tragkörpers muß eine solche Justierung des Ventils (125) für unterschiedliche Zusammensetzungen des Beschichtungsmediums (124) durchgeführt werden. Die ermittelten Daten (Zeiten, Füllhöhen, Zusammensetzungen und/oder Viskositäten des Beschichtungsmediums, angelegte Über- bzw. Unterdrücke, Tragkörpertypen etc) werden in Tabellen miteinander korreliert eingetragen. Besonders vorteilhaft werden hierbei zusätzlich nicht nur Tragkörpertypen, sondern auch deren Eigenschaften, welche die Druckverhältnisse bei der Beschichtung bestimmen, ebenfalls eingetragen, wie z.B. Zelldichten, Längen, Zellgrößen, so dass bei folgenden Ventiljustierungen mit unterschiedlichen Beschichtungsmedien und Tragkörper aus den bekannten Daten und den Eigenschaften der neu zu verwendenden Tragkörpertypen und Beschichtungssuspensionen bereits eine grobe Vorjustierung des Ventils (125) erfolgen kann und die genaue Justierung rascher erfolgen kann. Besonders vorteilhaft erfolgt eine Ventiljustierung automatisch, wie z.B. rechnergesteuert. Hierbei wird entweder eine Neujustierung durch einen Operator oder den Zentralrechner (150) angestoßen, oder aber anhand veränderter Eigenschaften des Beschichtungsmediums (wie Leitfähigkeit oder Viskosität) oder eines anderen Tragkörpertypen, der z.B. durch einen Barcode automatisch erkannt werden kann, automatisch ausgelöst. Die Justierung des Ventils (125) erfolgt dann durch einen Aktuator (A1), wie z.B. einem Servo. Die Füllhöhen von Tragkörper (121) und Steigrohr (127) werden mit Hilfe der Sensoren ermittelt und die zur Erreichung vorbestimmter Füllhöhen von dem Zentralrechner (150) miteinander verglichen, wobei der Rechner dann durch einen Aktuator (A1) die Justierung des Ventils (125) und gegebenenfalls von in Tabellen eingetragenen, vorher ermittelten Werten vornimmt und die Justierung gegebenenfalls so lange wiederholt, bis eine vorherbestimmte Genauigkeit erreicht wird. Nach der Justierung des Ventils (125) können die Tragkörper (121) mit einer gewünschten Menge des Beschichtungsmediums (124) beschichtet werden, indem die Zylinderachse (A) des Tragkörpers (121) vertikal ausgerichtet und das Beschichtungsmedium (124) durch mindestens eine der Stirnflächen (131,132) des Tragkörpers in die Kanäle (133) eingebracht wird. Wie oben beschrieben kann dies auf verschiedene Weisen geschehen, wie Einpumpen, Anlegen eines Überdrucks oder Anlegen eines Unterdrucks. Beim Anlegen eines Unterdrucks muß dieser ebenfalls an das Steigrohr angelegt werden. Während der Beschichtung eines einzelnen Tragkörpers (121) wird am Steigrohr (127) der Anstieg der Füllhöhe (FH) kontrolliert und bei Erreichen einer gewünschten Füllhöhe ein weiterer Flüssigkeitsanstieg unterbunden. Der weitere Flüssigkeitsanstieg wird durch Stoppen des Einpumpens oder Verringern des Über- bzw. Unterdrucks in Bezug zum Umgebungsdruck unterbunden. Hierdurch wird meist eine Entfernung des Beschichtungsmediums (124) aus dem Tragkörper (121) bewirkt, was insbesondere durch Abpumpen, Aussaugen oder Ausblasen erfolgt. Wird nämlich z.B. wie in EP-A1-941763 das Beschichtungsmedium (124) durch Anlegen eines Vakuums an die Beschichtungsvorrichtung (122) bewirkt, beispielsweise über die Zuleitung (120), so wird durch den umgebenden Normaldruck ein Gasstrom durch die Kanäle des Tragkörpers (121) bewirkt, welcher nicht nur das die Kanäle ausfüllende Beschichtungsmedium entfernt, sondern auch zur Entfernung überschüssiger Menge an Beschichtungsmedium (124) genutzt werden kann, welche unter Umständen an den Seitenwänden der Kanäle im inneren des Tragkörpers (121) haftet.

Zur Entfernung des Beschichtungsmediums (124) kann an den unteren Stirnflächen (131), beispielsweise über eine Ableitung (140), ein Unterdruck angelegt werden, indem zum Beispiel ein Abzugsventil (137) zu einem evakuierten Unterdruckbehälter (141) geöffnet wird (Fig.1). Gleichzeitig kann von den oberen Stirnflächen (132) des Tragkörpers Luft oder ein anderes, dem beschichteten Tragkörper und der Beschichtungssuspension gegenüber inertes Gas wie Stickstoff den oberen Stirnflächen drucklos zugeführt werden. Da der Druck im Unterdruckbehälter sinkt, verringert sich damit auch die Strömungsgeschwindigkeit des Gases in den Kanälen der Tragkörper. Ein solches Vorgehen ist beispielsweise in der EP-A1-941763, Seite 4, Zeile 56 bis Seite 5, Zeile 36 beschrieben, worauf Bezug genommen wird.

Es kann jedoch auch umgekehrt verfahren und das Vakuum an den oberen Stirnflächen und die Gaszufuhr an den unteren Stirnflächen der Tragkörper angelegt werden. Ebenso kann diese Zufuhr auch ein- oder mehrfach gewechselt bzw. umgekehrt werden, was gemäß US-B-7094728 eine gleichmäßigere Beschichtung der Kanäle in den Tragkörpern bewirkt.

Statt Anlegen eines Unterdrucks ("Aus- bzw. Freisaugen" der Tragkörper) kann auch ein Überdruck angelegt werden ("Ausblasen" der Tragkörper). Hierzu wird Luft oder ein anderes, den beschichteten Tragkörpern und der Beschichtungssuspension gegenüber inertes Gas wie Stickstoff der oberen oder unteren Stirnfläche unter Druck zugeführt. Diejenigen Stirnflächen, welche den mit Gasdruck beaufschlagten Stirnflächen gegenüberliegen, müssen dabei einen ausreichenden Abfluß des Gases gewährleisten. Dazu kann ein Unterdruck (Vakuum) angelegt werden, was aber nicht unbedingt erforderlich ist. Es sollte jedoch von den gegenüberliegenden Seiten nicht ebenfalls ein Gas- oder Flüssigkeitsdruck angelegt sein, um eine Strömungsgeschwindigkeit des Gases zu gewährleistet, die ausreicht, um überschüssige Beschichtungssuspension aus den Kanälen der Tragkörper zu entfernen. Ähnlich dem oben kurz skizzierten Verfahren gemäß US-B-7094728 kann auch in diesem Fall der Überdruck abwechselnd von den oberen und unteren Stirnflächen zugeführt werden.

Der Beschichtungsvorgang der Erfindung kann auch wiederholt werden, entweder um eine vollständige Beschichtung der Tragkörper durch zwei jeweils teilweise Beschichtungsschritte zu bewirken, oder aber um unterschiedliche Beschichtungen übereinander oder auf unterschiedlichen Abschnitten des Tragkörpers auszubringen. Diese Vorgehensweisen sind im Stand der Technik vom Prinzip her bekannt. Das Beschichtungsmedium (124) kann daher bei der Wiederholung des Beschichtungsvorgangs je nach Vorgehensweise gleich oder verschieden von dem Beschichtungsmedium eines vorangegangenen Beschichtungsvorgangs sein.

Vor einer Wiederholung des Beschichtungsvorgangs kann der Tragkörper (121) vorteilhaft um 180° gedreht und dann beschichtet werden, so dass die Beschichtung ausgehend von derjenigen Stirnfläche (132) des Tragkörpers (121) aus erfolgt, welcher derjenigen Stirnfläche (131) gegenüberliegt, von welcher im vorangegangenen Beschichtungsvorgang die Beschichtung ausging.

Nach Entfernen des Beschichtungsmediums (124) werden die Tragkörper (121) gegebenenfalls getrocknet sowie einer Wärmebehandlung unterzogen (kalziniert). Vor der Wärmebehandlung können die Tragkörper getrocknet werden. Diese Maßnahme ist optional, da die Tragkörper bei der folgenden Wärmebehandlung ohnehin getrocknet werden.

Zum Trocknen können die Kanäle (133) des Tragkörpers (121) nach der Entnahme aus der Beschichtungsvorrichtung beispielsweise von unten entgegen der Schwerkraft mit vorgewärmter Luft mit Temperaturen zwischen 20 und 150°C und Geschwindigkeiten von mehr als 4, bevorzugt 7 - 10 m/s, für die Dauer von 5 bis 20 s durchströmt wird. Durch diese Art der Vortrocknung vor der Wärmebehandlung kann ein häufig bei sehr hohen Beladungen zu beobachtendes Zulaufen der Strömungskanäle bzw. eine Verengung der Kanäle am unteren Ende der Tragkörper vermieden werden. Diese zusätzliche Maßnahme ermöglicht es, das Tragkörper mit einer höheren Beschichtungsmenge als üblich zu beladen, ohne daß sich die Strömungskanäle während des Trocknungs- und Kalzinierungsvorgangs verschließen oder verengen. Die Konzentration der Beschichtungsdispersion auf dem Tragkörper kann also durch diese Maßnahme erhöht werden.

Die Wärmebehandlung wird im Allgemeinen bei Temperaturen von etwa 150°C bis etwa 800°C, insbesondere bei etwa 200°C bis 700°C, vorteilhaft bei etwa 250°C bis etwa 600°C durchgeführt. Die Zeit der Wärmebehandlung liegt bei etwa 1 bis 5, vorteilhaft 2 bis 3 Stunden und einer Aufheizrate von etwa 10°C/min bis etwa 50°C/min, insbesondere etwa 20°C/min bis etwa 40°C/min, vorteilhaft etwa 35°C/min bis etwa 45°C/min, wobei sich die Aufheizraten auf die Temperatur des Ofens beziehen. Die Aufheizraten können bei batchweiser Wärmebehandlung durch eine entsprechende, gesteuerte Aufheizung des Ofens oder in einem kontinuierlichen Prozeß durch die Steuerung der Vorschubgeschwindigkeit der Tragkörper durch einen Tunnelofen bewirkt werden, welcher mit einem festgelegten Temperaturprofil betrieben wird.

In einer spezifischen Ausgestaltung des Verfahrens der Erfindung wird der Tragkörper vor dem Anordnen auf der Beschichtungsvorrichtung angefeuchtet. Die Tragkörper weisen im trockenen Zustand ein erhebliches Saugvermögen für Flüssigkeiten auf. Insbesondere bei der Beschichtung von hochzelligen Tragkörpern mit Zelldichten von 120 cm⁻² und darüber kann dies schon während des Füllens zu einer Verfestigung des Beschichtungsmediums und einer Verstopfung der Strömungskanäle führen. Es ist daher vorteilhaft, die Tragkörper vor dem Beschichten anzufeuchten. Hierbei kann es sich auch um eine Vorimprägnierung mit Säuren, Basen oder Salzlösungen handeln. Die Vorimprägnierung erleichtert die Ausbildung der Beschichtung auf den Kanalwänden nach der Sol-Gel-Methode. Durch den Kontakt der Beschichtungsdispersion mit den vorimprägnierten Kanalwänden wird der pH-Wert der Dispersion verschoben, wodurch eine geeignete, als Beschichtungsmedium verwendete Dispersion in ein Gel überführt wird.

Die vorliegende Erfindung betrifft auch ein Verfahren zur Herstellung von Abgasanlagen enthaltend beschichtete Tragkörper (121), wobei mindestens ein Tragkörper (121) nach dem Verfahren der Erfindung beschichtet wird und mindestens ein derart beschichteter Tragkörper (121) mit der Abgasanlage verbunden wird, das heißt, der beschichtete Tragkörper wird in die Abgasanlage derart eingelegt oder eingebaut, dass der Abgasstrom den fertigen beschichteten Tragkörper durchströmt und der Schadstoffgehalt der Abgase verringert wird. Die Abgasanlage ist insbesondere eine Abgasanlage eines Kraftfahrzeugs. Die Vorrichtung der Erfindung kann daher zur Herstellung beschichteter Tragkörper zur Reinigung von Abgasen verwendet werden.

### Bezugszeichenliste:

- 120: Zuleitung für Beschichtungsmedium 124
- 121: Tragkörper
- 122: Beschichtungsvorrichtung
- 123: Sensoren für den Füllstand in 122
- 124: Beschichtungsmedium
- 125: Ventil am Steigrohreintritt
- 126a,b: Sensoren für Flüssigkeitsstand im Steigrohr 127
- 126c,d: Sensoren für Flüssigkeitsstand im Tragkörper 121
- 127: Steigrohr
- 128a: Füllhöhe im Steigrohr 127
- 128b: Füllhöhe im Tragkörper 121
- 130: Mantelfläche des Tragkörpers 121
- 131: Erste Stirnfläche des Tragkörpers 121
- 132: Zweite Stirnfläche des Tragkörpers 121
- 133: Kanäle im Tragkörper 121
- 135: Förderpumpe für Beschichtungsmedium 124
- 136: Dosimeter
- 137: Abzugsventil
- 140: Ableitung aus 122 für Beschichtungsmedium 124
- 141: Unterdruckbehälter
- 142: Rückführleitung für Beschichtungsmedium 124
- 143: Rückführförderpumpe
- 144: Behälter für Beschichtungsmedium
- 145: Sauggebläse für Beschichtungsmedium (Fig.4)
- 146: Dichtung unten
- 147: Dichtung oben
- 148: Absaughaube
- 150: Zentralrechner

- 201: Verfahrensmerkmal Anordnung von 121 in 122 via Ventil 125 mit Steigrohr 127
- 202: Verfahrensmerkmal Einstellung Ventil 125
- 203: Verfahrensmerkmal Teil-Beschichtung des Tragkörpers
- 204: Verfahrensmerkmal Kontrolle der Füllhöhe 128
- 205: Verfahrensmerkmal Unterbindung des Anstiegs
- 210: Verfahrensmerkmal Unterbindung durch Entfernung von 124
- 211: Verfahrensmerkmal Unterbindung durch Abpumpen
- 212: Verfahrensmerkmal Wiederholung der Beschichtung
- 213: Verfahrensmerkmal Drehen des Tragkörpers und Wiederholung der Beschichtung
- 215: Verfahrensmerkmal Wiederholung der Beschichtung mit einem anderen Beschichtungsmedium
- 216: Verfahrensmerkmal Wärmebehandlung

- A: Zylinderachse
- A1: Aktivator für Ventil 125
- A2: Aktivator für Abzugsventil 137
- A3: Aktivator für Absauggebläse 145
- A4: Aktivator für Förderpumpe 135
- D: Durchmesser von Tragkörper 121
- L: Länge von Tragkörper 121
- FH: Füllhöhe des Tragkörpers 121

## Patentansprüche

1. Anordnung zum vollständigen oder teilweisen Beschichten von Tragkörpern (121) mit flüssigem Beschichtungsmedium (124), wobei die Tragkörper (121) je eine Zylinderachse, zwei Stirnflächen, eine Mantelfläche und eine axiale Länge L aufweist und von der ersten Stirnfläche zur zweiten Stirnfläche von einer Vielzahl von Kanälen durchzogen sind und der Tragkörper (121) mit einer gewünschten Menge des Beschichtungsmediums (124) beschichtet wird, indem seine Zylinderachse vertikal ausgerichtet und das Beschichtungsmedium (124) durch mindestens eine der Stirnflächen des Tragkörpers in die Kanäle eingebracht wird,
**dadurch gekennzeichnet,**
**dass** der Tragkörper (121) an einer Beschichtungsvorrichtung (122) angeordnet ist, deren flüssigkeitsführender Teil über ein Ventil (125) mit einem Steigrohr (127) verbunden ist, wobei das Ventil (125) gleiche Druckverhältnisse und damit einen im Wesentlichen gleichen Flüssigkeitsanstieg im Steigrohr (127) wie im Tragkörper sicherstellt, so daß das Steigrohr (127) die Kontrolle der Füllhöhe (FH) des Beschichtungsmediums (124) im Tragkörper (121) gestattet.

2. Anordnung nach Anspruch 1, wobei die Füllhöhe (FH) kleiner ist als die axiale Länge L des Tragkörpers.

3. Anordnung nach Anspruch 1 oder 2, wobei die Kontrolle der Füllhöhe (FH) des Beschichtungsmediums (124) im Tragkörper (121) durch mindestens einen Sensor (126) am Steigrohr (127) bewirkt wird.

4. Anordnung nach Anspruch 3, wobei die Sensoren ausgewählt sind aus der Gruppe bestehend aus Leitfähigkeitssensoren, Ultraschallsensoren, Lichtschranken und deren Kombinationen.

5. Verfahren zum vollständigen oder teilweisen Beschichten von Tragkörpern (121) mit flüssigem Beschichtungsmedium (124), wobei die Tragkörper (121) je eine Zylinderachse (A), zwei Stirnflächen (131, 132), eine Mantelfläche (130) und eine axiale Länge L aufweist und von der ersten Stirnfläche (131) zur zweiten Stirnfläche (132) von einer Vielzahl von Kanälen (133) durchzogen sind, wobei der Tragkörper (121) an einer Beschichtungsvorrichtung (122) angeordnet ist, deren flüssigkeitsführender Teil über ein Ventil (125) mit einem Steigrohr (127) verbunden ist,
**dadurch gekennzeichnet, dass**
- das Ventil (125) eingestellt wird, dass gleiche Druckverhältnisse und damit ein im Wesentlichen gleicher Flüssigkeitsanstieg im Steigrohr (127) wie im Tragkörper (121) sichergestellt ist, so daß das Steigrohr (127) die Kontrolle der Füllhöhe des Beschichtungsmediums (124) im Tragkörper (121) gestattet,
- der Tragkörper (121) mit einer gewünschten Menge des Beschichtungsmediums (124) beschichtet wird, indem seine Zylinderachse (A) vertikal ausgerichtet und das Beschichtungsmedium(124) durch mindestens eine der Stirnflächen (131, 132) des Tragkörpers in die Kanäle (133) eingebracht wird;
- am Steigrohr (127) der Anstieg der Füllhöhe (FH) kontrolliert und bei Erreichen einer gewünschten Füllhöhe (FH) ein weiterer Flüssigkeitsanstieg unterbunden wird.

6. Verfahren nach Anspruch 5, wobei der weitere Anstieg der Füllhöhe (FH) durch Entfernen des Beschichtungsmediums (124) aus dem Tragkörper (121) unterbunden wird.

7. Verfahren nach Anspruch 6, wobei die Entfernung durch Abpumpen, Aussaugen oder Ausblasen erfolgt.

8. Verfahren nach Anspruch 5, wobei der Beschichtungsvorgang wiederholt wird.

9. Verfahren nach Anspruch 8, wobei der Tragkörper (121) vor einer Wiederholung des Beschichtungsvorgangs um 180° gedreht und dann beschichtet wird, so dass die Beschichtung ausgehend von der gegenüberliegenden Stirnfläche des Tragkörpers (121) erfolgt.

10. Verfahren nach Anspruch 8 oder 9, wobei das Beschichtungsmedium (124) bei der Wiederholung des Beschichtungsvorgangs gleich oder verschieden von dem Beschichtungsmedium eines vorangegangenen Beschichtungsvorgangs ist.

11. Verfahren nach einem der Ansprüche 5 bis 10, wobei der Tragkörper (121) in einem nachfolgenden Schritt mindestens einer Wärmebehandlung unterzogen wird.

12. Verfahren zur Herstellung von Abgasanlagen enthaltend beschichtete Tragkörper (121), wobei mindestens ein Tragkörper (121) nach einem Verfahren der Ansprüche 5 bis 11 beschichtet wird und mindestens ein derart beschichteter Tragkörper (121) mit der Abgasanlage verbunden wird.

13. Verfahren nach Anspruch 12, wobei die Abgasanlage eine Abgasanlage eines Kraftfahrzeugs ist.

14. Verwendung einer Vorrichtung nach einem der Ansprüche 1 bis 4 zur Herstellung beschichteter Tragkörper zur Reinigung von Abgasen.

## Claims

1. An arrangement for the complete or partial coating of carrier bodies (121) with a liquid coating medium (124), each carrier body (121) comprising a cylinder axis, two end faces, a lateral surface and an axial length L and being traversed by a plurality of ducts from the first end face to the second end face, and wherein said carrier body (121) is coated with a desired quantity of said coating medium (124) by vertically aligning the cylinder axis thereof and introducing said coating medium (124) into said ducts through at least one of said end faces of said carrier body,
**characterized in that**
said carrier body (121) is arranged on a coating apparatus (122) whose liquid-conducting part is connected to an ascending pipe (127) via a valve (125), said valve (125) ensuring the same pressure conditions and therefore essentially the same rise of liquid in said ascending pipe (127) as in said carrier body, so that the ascending pipe (127) permits control of the fill level (FH) of said coating medium (124) in said carrier body (121).

2. The arrangement according to claim 1, wherein said fill level (FH) is less than said axial length L of said carrier body.

3. The arrangement in accordance with claim 1 or 2, wherein said fill level (FH) of said coating medium (124) in said carrier body (121) is monitored by at least one sensor (126) on said ascending pipe (127).

4. The arrangement in accordance with claim 3, wherein said sensors are selected from the group consisting of conductivity sensors, ultrasonic sensors, light curtains or combinations thereof.

5. A method for the complete or partial coating of carrier bodies (121) with a liquid coating medium (124), each of said carrier bodies (121) comprising a cylinder axis (A), two end faces (131, 132), a lateral surface (130) and an axial length L and being traversed by a plurality of ducts (133) from the first end face on a coating apparatus (122) whose liquid-conducting part is connected to an ascending pipe (127) via a valve (125),
**characterized in that**
- the valve (125) is set so as to ensure the same pressure conditions and therefore essentially the same rise of liquid in the ascending pipe (127) and in said carrier body (121) so that the ascending pipe (127) permits control of the fill level of said coating medium (124) in said carrier body (121),
- the carrier body (121) is coated with a desired quantity of the coating medium (124) by vertically aligning the cylinder axis (A) thereof and introducing said coating medium (124) into said ducts (133) through at least one of said end faces (131, 132) of said carrier body;
- the rise of the fill level (FH) is monitored at said ascending pipe (127), and when a desired fill level (FH) is reached, a further rise of said liquid is prevented.

6. The method in accordance with claim 5, wherein the further rise of the fill level (FH) is prevented by removing the coating medium (124) from the carrier body (121).

7. The method in accordance with claim 6, wherein removal is effected by pumping out, sucking out or blowing out.

8. The method in accordance with claim 5, wherein the coating procedure is repeated.

9. The method in accordance with claim 8, wherein before a repetition of the coating procedure, said carrier body (121) is rotated 180° and then coated, so that coating starts from the opposite end face of the carrier body (121).

10. The method in accordance with claim 8 or 9, wherein the coating medium (124) used during repetition of said coating procedure is the same as or different from the coating medium used in a preceding coating procedure.

11. The method in accordance with one of claims 5 to 10, in which the carrier body (121) is subjected at least to one heat treatment in a subsequent step.

12. A method for manufacturing exhaust gas systems containing coated carrier bodies (121), in which at least one carrier body (121) is coated by a method according to claims 5 to 11 and at least one carrier body (121) coated in this way is connected to said exhaust gas system.

13. The method in accordance with claim 12, in which the exhaust gas system is an exhaust gas system of a motor vehicle.

14. The use of a device in accordance with one of claims 1 to 4 for manufacturing coated carried bodies for cleaning exhaust gases.

## Revendications

1. Agencement destiné au revêtement complet ou partiel de corps de support (121) avec un agent de revêtement (124) liquide, les corps de support (121) comportant respectivement un axe de cylindre, deux faces terminales, une surface d'enveloppe et une longueur axiale L, étant traversés par une pluralité de canaux de la première face terminale à la seconde face terminale et le corps de support (121) étant revêtu d'une quantité souhaitée d'agent de revêtement (124) en orientant son axe de cylindre dans le sens vertical et en introduisant l'agent de revêtement (124) dans les canaux à travers au moins une des faces terminales du corps de support,
**caractérisé en ce que**
le corps de support (121) est disposé sur un élément de revêtement (122), dont la partie en contact avec le liquide est reliée à un tuyau de montée (127) par le biais d'une vanne (125), cette dernière (125) assurant des conditions de pression identiques et ainsi une montée de liquide sensiblement identique dans le tuyau de montée (127) et dans le corps de support, de telle sorte que le tuyau de montée (127) permet de contrôler la hauteur de remplissage (FH) de l'agent de revêtement (124) dans le corps de support (121).

2. Agencement selon la revendication 1, où la hauteur de remplissage (FH) est inférieure à la longueur axiale L du corps de support.

3. Agencement selon la revendication 1 ou 2, où le contrôle de la hauteur de remplissage (FH) de l'agent de revêtement (124) dans le corps de support (121) est effectué par au moins un capteur (126) sur le tuyau de montée (127).

4. Agencement selon la revendication 3, où les capteurs sont sélectionnés dans le groupe constitué des capteurs de conductivité, des capteurs à ultrasons, des barrières photoélectriques et de leurs combinaisons.

5. Procédé de revêtement complet ou partiel de corps de support (121) avec un agent de revêtement (124) liquide, les corps de support (121) comportant respectivement un axe de cylindre (A), deux surfaces terminales (131, 132), une surface d'enveloppe (130) et une longueur axiale L et étant traversés par une pluralité de canaux (133) de la première surface terminale (131) à la seconde surface terminale (132), le corps de support (121) étant disposé sur un élément de revêtement (122) dont la partie en contact avec le liquide est reliée à un tuyau de montée (127) par le biais d'une vanne (125),
**caractérisé en ce que**
- la vanne (125) est réglée de manière à assurer des conditions de pression identiques et ainsi une montée de liquide sensiblement équivalente dans le tuyau de montée (127) et dans le corps de support (121), de telle sorte que le tuyau de montée (127) permet de contrôler la hauteur de remplissage du milieu de revêtement (124) dans le corps de support (121),
- le corps de support (121) est revêtu d'une quantité souhaitée d'élément de revêtement (124) en orientant son axe de cylindre (A) dans le sens vertical et en introduisant l'élément de revêtement (124) dans les canaux (133) à travers au moins une des surfaces terminales (131, 132) du corps de support.
- la montée de la hauteur de remplissage (FH) est contrôlée sur le tuyau de montée (127) et lorsqu'une hauteur de remplissage (FH) souhaitée est atteinte, le système empêche toute montée de liquide.

6. Procédé selon la revendication 5, où le système empêche toute montée de la hauteur de remplissage (FH) en retirant l'élément de revêtement (124) du corps de support (121).

7. Procédé selon la revendication 6, où le retrait est effectué par pompage, aspiration ou soufflage.

8. Procédé selon la revendication 5, où le processus de revêtement est répété.

9. Procédé selon la revendication 8, où une rotation de 180° du corps de support (121) est effectuée avant que le processus de revêtement ne se répète ; le corps de support est alors revêtu, en partant de la surface terminale opposée du corps de support (121).

10. Procédé selon la revendication 8 ou 9, où, lors de la répétition du processus de revêtement, l'élément de revêtement (124) est identique ou différent de celui d'un processus de revêtement précédent.

11. Procédé selon l'une des revendications 5 à 10, où le corps de support (121) est soumis à au moins un traitement thermique dans une étape suivante.

12. Procédé de fabrication de systèmes d'échappement possédant des corps de support (121) revêtus, où au moins un corps de support (121) est revêtu par rapport à un procédé selon les revendications 5 à 11 et au moins un corps de support (121) revêtu de cette manière est relié au système d'échappement.

13. Procédé selon la revendication 12, où le système d'échappement est identique à celui d'un véhicule à moteur.

14. Utilisation d'un dispositif selon l'une des revendications 1 à 4, permettant de fabriquer des corps de support revêtus, destinés à l'épuration de gaz d'échappement.
